# EUROPEAN PATENT APPLICATION

(11) **EP 4 789 913 A1**
(43) Date of publication of application: **12.08.2026**
(21) Application number: 26157534.4
(22) Date of filing: 10.02.2026
(51) Int. Cl.: B60N 2/90, A61H 9/00

(54) **SEQUENTIAL FILL AND DEFLATE BLADDERS WITH PNEUMATIC VALVES**

(30) Priority: 10.02.2025 US 202563756550 P; 30.01.2026 US 202619465046
(71) Applicant: Lear Corporation, Southfield, MI 48033 (US)
(72) Inventor: Morris, Matthew, Southfield, MI, 48033 (US); Blair, Samuel, Southfield, MI, 48033 (US)
(74) Representative: Grünecker Patent- und Rechtsanwälte PartG mbB

(57) **Abstract**

A seat system includes a plurality of inflatable bladders, an inlet port, a plurality of bladder inflation inlet passages fluidly connecting the inlet port with, respectively, the inflatable bladders, and a plurality of pneumatic switches on, respectively, the bladder inflation inlet passages. The pneumatic switches have an open state and a closed state to, respectively, open and close fluid flow through the bladder inflation inlet passages.

## Description

### BACKGROUND

Automobile seats may include a massage assembly that has inflatable cells or bladders. The bladders are connected via fluid supply lines to a valve arrangement. A pump provides air to the valve arrangement, which directs the air to the bladders to be inflated. The bladders may be inflated and deflated in a sequence to provide a desired massage effect to a seat occupant.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example seat system.
Figure 2 illustrates portions of an inflatable bladder assembly.
Figure 3A illustrates an example of a pneumatic switch in an open state, allowing flow through.
Figure 3B illustrates an example of a pneumatic switch in a closed state, blocking flow through
Figure 4A illustrates a bladder vent pneumatic switch in which the absence of air flow and pressurization of the bladder vent substantially blocks flow through the vent conduit.
Figure 4B illustrates the bladder vent pneumatic switch of Figure 4A in which inflation of the vent bladder causes the vent bladder to expand the vent conduit to allow vent air flow to expel through exit port of the vent conduit.
Figure 5 illustrates a cycle of operation of the bladder assembly to sequentially inflate and deflate the bladders.
Figure 6 illustrates the next step in the cycle of operation of the bladder assembly to sequentially inflate and deflate the bladders.
Figure 7 illustrates the next step in the cycle of operation of the bladder assembly to sequentially inflate and deflate the bladders.
Figure 8 illustrates the next step in the cycle of operation of the bladder assembly to sequentially inflate and deflate the bladders.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

"One or more" includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

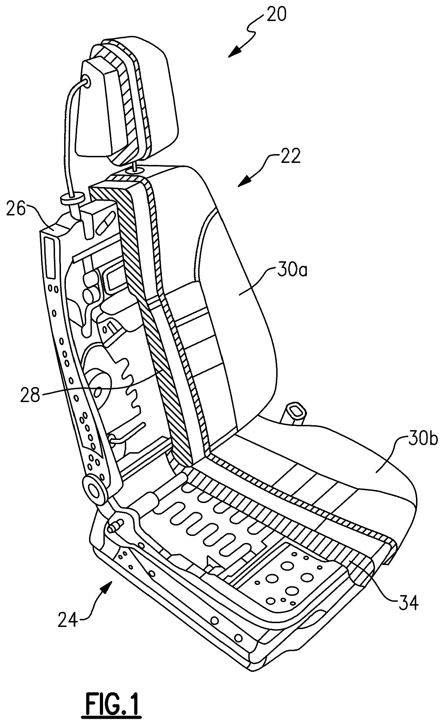

Figure 1 illustrates an example seat system 20 for an automobile. In this example, the seat system 20 system includes a seat back 22 and a seat base 24. A seat frame 26 supports a cushion 28 in the seat back 22, which is covered by trim 30a. In the seat base 24, the frame 26 supports a bottom seat cushion 34, which is covered by seat trim 30b. Although the example seat system 20 is for an automobile, it is to be understood that the examples are applicable to other types of vehicles, such as but not limited to, a motorcycle, a watercraft, an aircraft, or a locomotive.

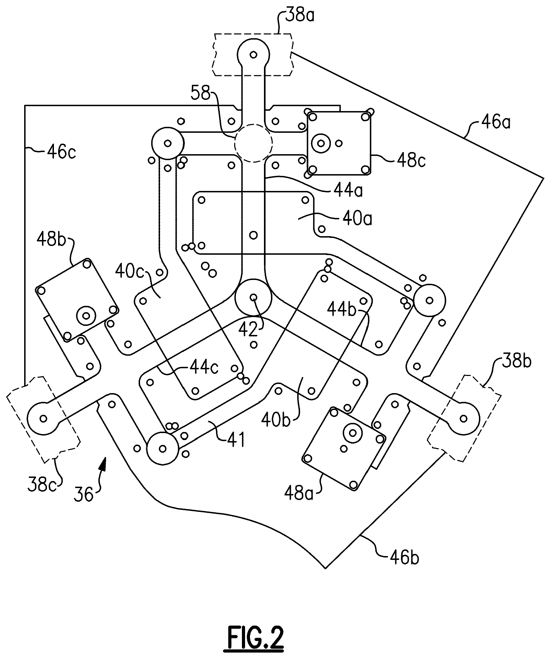

Figure 2 illustrates selected portions of an inflatable bladder assembly 36 for incorporation into the seat system 20. The inflatable bladder assembly 36 is gas-operable and includes a plurality of inflatable bladders (generally 38). The gas most typically will be air, but alternatively can be virtually any readily available gas that does not degrade the bladder assembly 36. In this example there are three bladders 38a, 38b, and 38c. It is to be understood, however, that the assembly 36 could have more than three bladders 38, such as but not limited to up to twenty bladders. For example, each bladder 38 includes one cell or cavity to receive air. Alternatively, each bladder 38 contains multiple cells or cavities that co-inflate and codeflate when provided with air. That is, inflation or deflation of one of the cells or cavities necessarily causes inflation or deflation, respectively, of each of the other cells or cavities. The bladders 38 and air passages described below may be formed from polymer films 41 (e.g., thermoplastic urethane) that are welded together to form expandable cells and passages.

As will also be discussed below, the bladders 38 are interconnected (fluidly) with pneumatic switches (generally 40), in this case three switches 40a, 40b, and 40c that are configured to sequentially inflate and deflate the bladders 38. Sequential inflation and deflation has previously required a powered (electrically) valve for each bladder and a central controller to direct the sequence of inflation/deflation. Thus, each bladder of a design adds cost due to an additional powered valve that is needed to inflate/deflate the bladder. However, the bladder assembly 36 is not based on powered valves and, instead, utilizes the pneumatic switches 40 that operate passively based on air flow, without external electrical control input to the switches 40.

The bladder assembly 36 further includes an inlet port 42 and bladder inflation inlet passages (generally 44), in this case three passages 44a, 44b, and 44c, fluidly connecting the inlet port 42 with, respectively, the inflatable bladders 38a, 38b, and 38c. For example, the inlet port 42 is an orifice in the polymer film that is fluidly connected or connectable with an air supply source, such as an air pump. The inlet port 42 is a single inlet port for air into the bladder assembly 36. That is, only one air inlet port is required for fully functional operation of the assembly 36.

The pneumatic switches 40a, 40b, and 40c are on, respectively, the bladder inflation inlet passages 44a, 44b, and 44c. As an example, a pneumatic switch is a nonelectrically-powered switch that changes between open and closed states responsive to an air flow to the switch, namely air flow that inflates the switch. Each of the pneumatic switches 46 has an open state and a closed state to, respectively, open and close air flow through the bladder inflation inlet passages 44a, 44b, and 44c. The "open state" and the "closed state" refer to whether air flow is permitted through each of the passages 44a, 44b, and 44c that are associated with the respective switches 40a, 40b, and 40c. That is, there is a one-for-one association of switches 40 and passages 44 such that switch 40a is on passage 44a and controls flow there through; switch 40b is on passage 44b and controls flow there through; and switch 40c is on passage 44c and controls flow there through. Additionally, each bladder 38 is connected by a vent conduit (generally 46), in this case three vent conduits 46a, 46b, and 46c to a respective bladder vent 48a, 48b, and 48c. As discussed below, the bladders vents 48a, 48b, and 48c are also considered to be pneumatic switches.

The pneumatic switches 40a, 40b, and 40c are arranged in a parallel flow configuration. In a parallel flow configuration each of the switches 40a, 40b, and 40c has its own fluid connection with the inlet port 42, i.e., respective passages 44a, 44b, and 44c, such that flow from the inlet port 42 to any one of the switches does not need to flow through any other of the pneumatic switches 40a, 40b, and 40c.

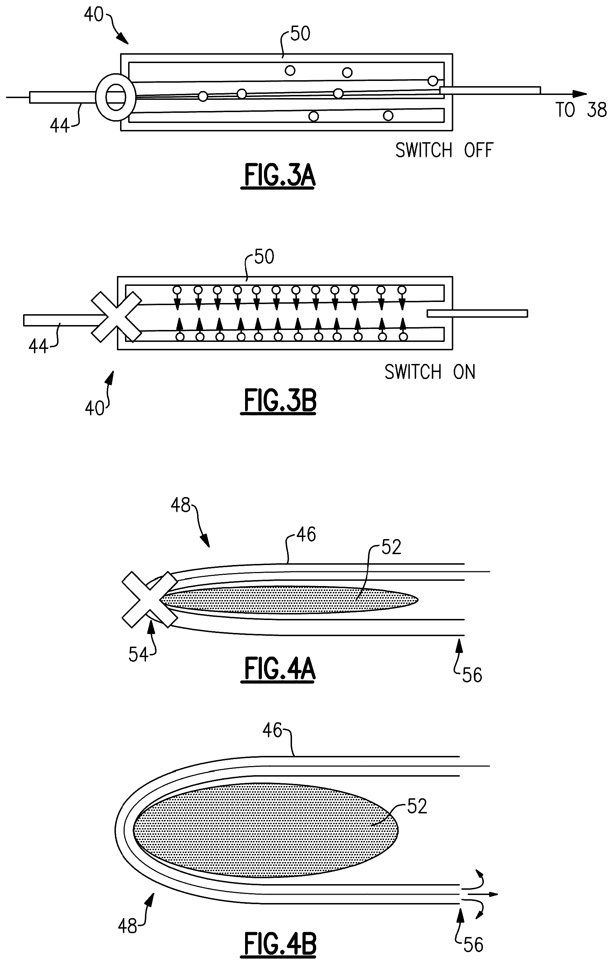

Figure 3A illustrates a representative example of a pneumatic switch 40 from the bladder assembly 36. The switch 40 is a normally-open switch. As used herein, "normally" means in absence of air flow and pressurization of the switch 40, the switch 40 is open and allows air flow through the passage 44. The switch 40 includes a switch bladder 50 that serves to control air flow through one of the passages 44. As an example, the switch bladder 50 is an inflatable bag and the passage 44 extends through the inflatable bag. Actuation of the switch 40 by inflation of the switch bladder 50 substantially prevents air flow through the passage 44. For instance, in Figure 3A the switch bladder 50 is unpressurized, e.g., no substantial air flow or air pressure is provided into the switch bladder 50. In this low-pressure state, the passage 44 is uncollapsed and thus air flow is permitted through the passage 44 to the downstream bladder 38. Conversely, as shown in Figure 3B, the switch bladder 50 is pressurized, e.g., air flow (and thus air pressure) is provided into the switch bladder 50. In this high-pressure state, the air pressure in the switch bladder 50 collapses the passage 44 and thus substantially blocks air flow there through to the downstream bladder 38.

Figure 4A illustrates a representative example of a bladder vent 48 from the bladder assembly 36, which is also a pneumatic switch. The bladder vent 48 is a normally-closed switch. Thus, in absence of air flow and pressurization of the bladder vent 48, the bladder vent 48 substantially blocks flow through the vent conduit 46. The bladder vent 48 includes a vent bladder 52 that is fluidly connected to one of the passages 44, and the vent conduit 46 is wrapped around the vent bladder 52. The conduit 46 includes a kink 54 that blocks vent air flow through the conduit 46 from a respective one of the bladders 38. As shown in Figure 4B, inflation of the vent bladder 52 causes the vent bladder 52 to expand and "unkink" the conduit 46 to allow vent air flow to expel through exit port 56. For instance, the kink 54 is a tight bend in the conduit 46 that causes the cross-section of the conduit 46 to collapse on itself and block air flow there through. Expansion of the vent bladder 52 moves the conduit 46 to a larger radius of bend such that the conduit 46 rebounds towards its default cross-sectional shape and thus allows air flow there through. The vent conduit 46 is biased to the kinked state, such as with a tie or fastener, such that upon deflation of the vent bladder 52, the vent conduit 46 returns to the kinked state to again block vent air flow.

The bladders 38, switch bladders 50, and vent bladders 52 are fluidly interconnected with the passages 44. For instance, each of the passages 44 includes a node 58 (Figure 2) at which the passage 44 splits into three branch passages that lead, respectively, to one of the inflatable bladders 38, to one of the the switch bladders 50, and to one of the vent bladders 52.

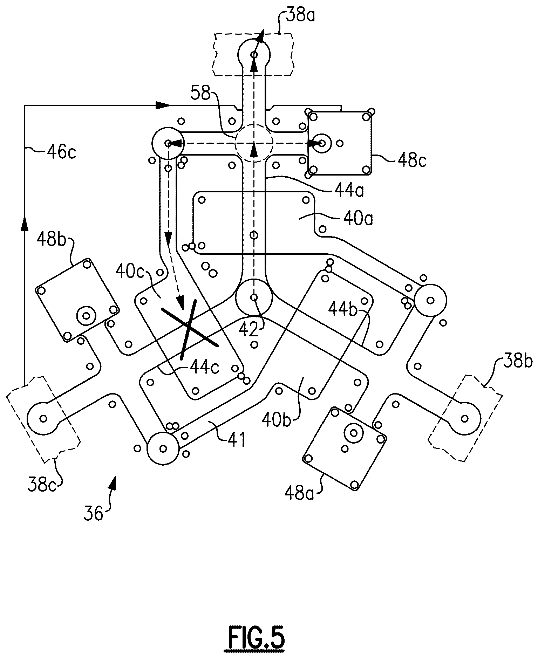

Figures 5 through 8 demonstrate an example cycle of operation of the bladder assembly 36 to sequentially inflate and deflate the bladders 38. The term "sequential" refers to order in which the bladders 38 are inflated and deflated in repetition. Referring to Figure 5, air is initially introduced into the assembly 36 though the inlet port 42. At the node 58 in the passage 44a, the air flow splits and a portion of the air flow travels through the first branch passage to inflate the first bladder 38a. Another portion of the air flow travels through the second branch passage to inflate the vent bladder 52 of bladder vent 48c. And the remaining air flow travels through the third branch passage to inflate the switch bladder 50 of pneumatic switch 40c. Inflation of the switch 40c blocks flow though passage 44c to bladder 38c, and inflation of the bladder vent 48c opens the vent conduit 46c to cause deflation of the bladder 38c and switch 40b, which may be inflated from a prior operation cycle.

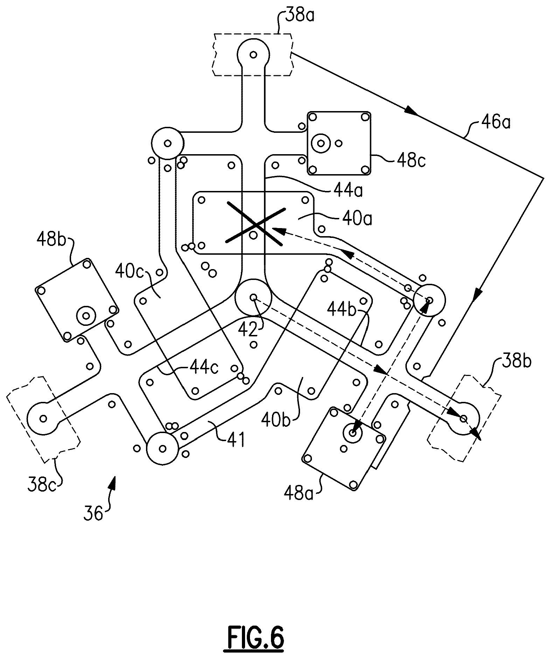

Referring to Figure 6, with the venting of the bladder 38c, the continuance of air flow to the inlet port 42 causes air flow through the passage 44b to the node 58 in the passage 44b. The air flow splits at the node 58 and a portion of the air flow travels through the first branch passage to inflate the second bladder 38b. Another portion of the air flow travels through the second branch passage to inflate the vent bladder 52 of bladder vent 48a. And the remaining air flow travels through the third branch passage to inflate the switch bladder 50 of pneumatic switch 40a. Inflation of the switch 40a blocks flow though passage 44a to bladder 38a, and inflation of the bladder vent 48a opens the vent conduit 46a to cause deflation of the bladder 38a (and thus also deflation of the switch 40c).

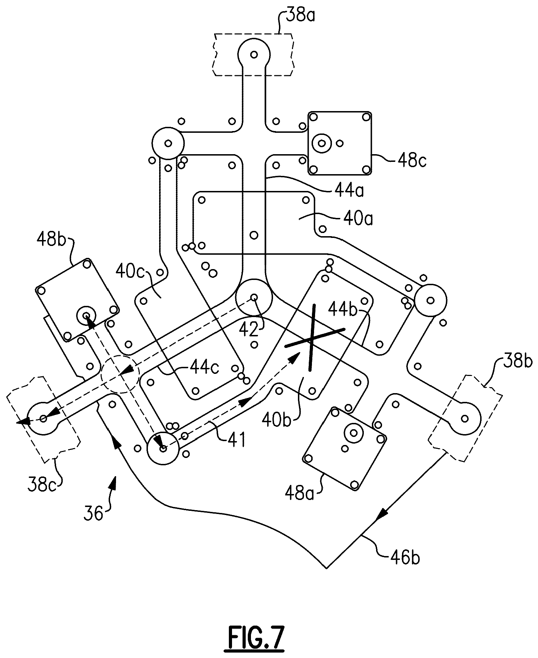

Referring to Figure 7, with the venting of the bladder 38a, the continuance of air flow to the inlet port 42 causes air flow through the passage 44c to the node 58 in the passage 44c. The air flow splits at the node 58 and a portion of the air flow travels through the first branch passage to inflate the third bladder 38c. Another portion of the air flow travels through the second branch passage to inflate the vent bladder 52 of bladder vent 48b. And the remaining air flow travels through the third branch passage to inflate the switch bladder 50 of pneumatic switch 40b. Inflation of the switch 40b blocks flow though passage 44b to bladder 38b, and inflation of the bladder vent 48b opens the vent conduit 46b to cause deflation of the bladder 38b (and thus also deflation of the switch 40a).

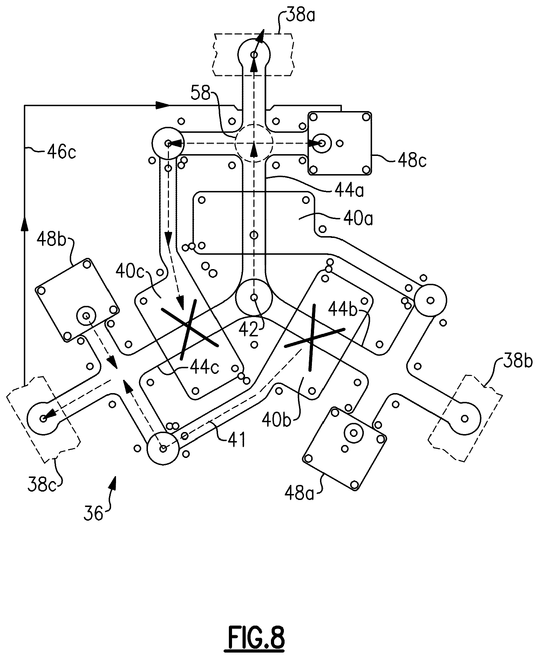

Referring to Figure 8, with the venting of the bladder 38b, the continuance of air flow to the inlet port 42 causes air flow through the passage 44c to the node 58 in the passage 44c. The air flow splits at the node 58 and a portion of the air flow travels through the first branch passage to inflate the third bladder 38c. Another portion of the air flow travels through the second branch passage to inflate the vent bladder 52 of bladder vent 48b. And the remaining air flow travels through the third branch passage to inflate the switch bladder 50 of pneumatic switch 40b. Inflation of the switch 40b blocks flow though passage 44b to bladder 38b, and inflation of the bladder vent 48b opens the vent conduit 46b to cause deflation of the bladder 38b (and thus also deflation of the switch 40a). The operation then repeats another cycle of sequential inflation and deflation from Figure 5. Thus, with continual air flow provided to the inlet port 42, the bladders 38 sequentially inflate and deflate responsive to passive actuation of the pneumatic switches.

In one further embodiment, instead of the bladder vents 48, the vent conduits 46 are wrapped around the ends, respectively, of the switch bladders 50 of the switches 40a, 40b, and 40c. Thus, in this example, the switch bladder 50 also serves as the vent bladder such that inflation of the switch bladder 50 causes the vent conduit 46 to unkink.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A seat system comprising:
a plurality of inflatable bladders;
an inlet port;
a plurality of bladder inflation inlet passages fluidly connecting the inlet port with, respectively, the inflatable bladders; and
a plurality of pneumatic switches on, respectively, the bladder inflation inlet passages, the pneumatic switches having an open state and a closed state to, respectively, open and close fluid flow through the bladder inflation inlet passages.

2. The seat system as recited in claim 1, wherein the pneumatic switches are fluidly interconnected with the bladder inflation inlet passages and the inflatable bladders,
wherein preferably the pneumatic switches are inflatable and have a deflated condition corresponding to the open state and an inflated condition corresponding to the closed state.

3. The seat system as recited in any of the preceding claims, wherein inflation of a first one of the inflatable bladders through a first one of the bladder inflation passages pneumatically activates a first one of the pneumatic switches that is on a second one of the bladder inflation passages from an open state to a closed state, and in the closed state the second one of the pneumatic switches blocks flow through the second one of the bladder inflation inlet passages that is associated with a second one of the inflatable bladders to prevent inflation of the second one of the inflatable bladders.

4. The seat system as recited in any of the preceding claims, wherein a portion of the pneumatic switches are normally-open, and another portion of the pneumatic switches are normally-closed.

5. The seat system as recited in claim 4, further comprising a plurality of bladder vents fluidly connected, respectively, with the inflatable bladders, and wherein the normally-closed pneumatic switches are on the bladder vents.

6. The seat system as recited in claim 5, wherein the bladder vents include a conduit, the normally-closed pneumatic switches include switch bladders, the conduits are wrapped around the switch bladders, the conduits include a kink that blocks vent flow through the conduit, and inflation of the switch bladders causes the conduits to unkink and allow vent flow to expel,
wherein preferably the normally-open pneumatic switches are on the bladder inflation inlet passages.

7. The seat system as recited in claim 6, wherein the normally-open pneumatic switches include switch bladders and conduits extending through the switch bladders, the conduits are in an uncollapsed state that allows flow through the conduit, and inflation of the switch bladder causes collapse of the conduit that blocks flow through the conduit,
wherein preferably each of the bladder inflation inlet passages includes a node at which the bladder inflation inlet passage branches to a first branch passage that leads to one of the inflatable bladders, a second branch passage that leads the switch bladder of one of the normally-open pneumatic switches, and a third branch passage that leads to the switch bladder of one of the normally-closed pneumatic switches.

8. The seat system as recited in any of the preceding claims, wherein the inflatable bladders are formed from polymer films.

9. The seat system as recited in any of the preceding claims, wherein the pneumatic switches are arranged in parallel flow.

10. A seat system comprising:
a plurality of inflatable bladders;
an inlet port;
a plurality of bladder inflation inlet passages fluidly connecting the inlet port with, respectively, the inflatable bladders;
a plurality of bladder vents fluidly connected with, respectively, the inflatable bladders;
a plurality of inflatable pneumatic switches fluidly interconnected with the inflatable bladders, the bladder inflation inlet passages, and the bladder vents, wherein the upon a continuous air flow provided to the inlet port, the inflatable pneumatic switches sequentially inflate and deflate the inflatable bladders.

11. The seat system as recited in claim 10, wherein a portion of the pneumatic switches are normally-open, and another portion of the pneumatic switches are normally-closed.

12. The system as recited in claim 11, wherein the normally-closed pneumatic switches are on the bladder vents.

13. The system as recited in claim 12, wherein the bladder vents include a conduit, the normally-closed pneumatic switches include first switch bladders and the conduits are wrapped around the first switch bladders, the conduits include a kink that blocks vent flow through the conduit, and inflation of the first switch bladders causes the conduits to unkink and allow vent flow to expel,
wherein preferably the normally-open pneumatic switches are on the bladder inflation inlet passages.

14. The system as recited in claim 13, wherein the normally-open pneumatic switches include second switch bladders and conduits extending through the switch bladders, the conduits are in an uncollapsed state that allows flow through the conduit, and inflation of the second switch bladder causes collapse of the conduit that blocks flow through the conduit,
wherein preferably each of the bladder inflation inlet passages includes a node at which the bladder inflation inlet passage branches to a first branch passage that leads to one of the inflatable bladders, a second branch passage that leads the switch bladder of one of the normally-open pneumatic switches, and a third branch passage that leads to the switch bladder of one of the normally-closed pneumatic switches.

15. The system as recited in any of claims 10 to 14, wherein the pneumatic switches are arranged in parallel flow.
